(19) Europäisches Patentamt / European Patent Office / Office européen des brevets

(11) **EP 4 654 285 A1**

(12) **EUROPEAN PATENT APPLICATION**

(43) Date of publication:
26.11.2025 Bulletin 2025/48

(21) Application number: 25171160.2

(22) Date of filing: 17.04.2025

(51) International Patent Classification (IPC):
**H01M 4/136** (2010.01)    **H01M 4/58** (2010.01)

(52) Cooperative Patent Classification (CPC):
**H01M 4/136; H01M 4/5825**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 22.04.2024 KR 20240053592

(71) Applicant: SAMSUNG SDI CO., LTD.
Yongin-si, Gyeonggi-do 17084 (KR)

(72) Inventors:
• CHOI, Aram
  17084 Yongin-si (KR)

• LEE, Soonrewl
  17084 Yongin-si (KR)
• KIM, Young-Ki
  17084 Yongin-si (KR)
• KIM, Sangmi
  17084 Yongin-si (KR)
• DOO, Sungwook
  17084 Yongin-s (KR)
• KANG, Gwiwoon
  17084 Yongin-si (KR)

(74) Representative: Marks & Clerk LLP
15 Fetter Lane
London EC4A 1BW (GB)

(54) **POSITIVE ELECTRODE ACTIVE MATERIAL FOR RECHARGEABLE LITHIUM BATTERY, METHOD OF MANUFACTURING THE SAME, AND RECHARGEABLE LITHIUM BATTERY INCLUDING THE SAME**

(57)    A positive electrode active material includes a first particle comprising a compound represented by Chemical Formula 1 having a first average particle diameter. A ratio ($I_D/I_G$) of the intensity ($I_D$) of the D peak at a wave number of about $1340\pm10$cm$^{-1}$ to the intensity ($I_G$) of the G peak at a wave number of about $1590\pm10$cm$^{-1}$ in a Raman spectrum obtained by Raman spectroscopy is in a range of about 0.9 to about 1.3. Also disclosed are a method of manufacturing positive electrode active materials, and rechargeable lithium batteries comprising positive electrode active materials.

FIG. 10A

50nm

EP 4 654 285 A1

**Description**

**BACKGROUND**

**(a) Field**

The present invention relates to a positive electrode active material for a rechargeable lithium battery, a method of manufacturing the positive electrode active material, and a rechargeable lithium battery including the positive electrode. More particularly, the present invention relates to a positive electrode active material including an olivine-based lithium compound, a method of manufacturing the positive electrode active material, and a rechargeable lithium battery including the positive electrode.

**(b) Description of the Related Art**

Recently, with the rapid spread of battery-using (e.g., battery-operated) electronic devices (such as mobile phones and/or laptop computers), and/or electric vehicles, there has been a significant increase in the demand or desire for rechargeable batteries with relatively high energy density and high capacity. Therefore, extensive research has been conducted to enhance (improve) the performance of rechargeable lithium batteries.

A rechargeable lithium battery includes a positive electrode, a negative electrode, and an electrolyte. The positive and negative electrodes each include an active material capable of intercalation and deintercalation of lithium ions. Electrical energy is generated (produced) by oxidation and reduction reactions when lithium ions are intercalated into and deintercalated from the positive electrode and the negative electrode.

**SUMMARY**

The present invention provides a positive electrode active material with (having) high conductivity and excellent (suitable) electrochemical properties.

The present invention also provides a rechargeable lithium battery with (having) high conductivity and excellent (suitable) electrochemical properties.

Additional aspects will be set forth in part in the description which follows and, in part, will be apparent from the description, or may be learned by practice of the presented embodiments of the disclosure.

According to a first aspect of the invention there is provided a positive electrode active material including a first particle that includes a compound represented by Chemical Formula 1 below and that has a first average particle diameter, where a ratio ($I_D/I_G$) of the intensity ($I_D$) of the D peak to the intensity ($I_G$) of the G peak of the first particle is from about 0.5 to about 1.5, preferably from about 0.9 to about 1.3, where the D peak is a peak present at wave number of about $1340 \pm 10$ $cm^{-1}$ and the G peak is a peak present at wave number of about $1590 \pm 10$ $cm^{-1}$, each in a Raman spectrum obtained from Raman spectroscopy. Chemical Formula 1

$$Li_{a1}Mn_xFe_{1-x}M_yPO_4,$$

In Chemical Formula 1, $0.8 \leq a1 \leq 1.2$, $0.2 < x < 0.8$, $0.0001 \leq y \leq 0.05$, and M is at least one element selected from among Ti, Al, Mg, Zr, V, Zn, Nb, K, Y, B, and Cu.

According to a second aspect of the invention there is provided a method of manufacturing a positive electrode active material including: forming a mixture by mixing a manganese iron phosphate precursor, a lithium source, a carbon source, and a dopant source; drying the mixture; and preparing a first particle by performing a calcination on the mixture, where the first particle comprises a compound represented by Chemical Formula 1:

$$Li_{a1}Mn_xFe_{1-x}M_yPO_4,$$

In Chemical Formula 1, $0.8 \leq a1 \leq 1.2$, $0.2 < x < 0.8$, $0.0001 \leq y \leq 0.05$, and M is at least one element selected from among Ti, Al, Mg, Zr, V, Zn, Nb, K, Y, B, and Cu.

According to a third aspect of the present invention there is provided a rechargeable lithium battery including the aforementioned positive electrode active material.

At least some of the above and other features of the invention are set out in the claims.

**BRIEF DESCRIPTION OF DRAWINGS**

The accompanying drawings are included to provide a further understanding of the disclosure, and are incorporated in and constitute a part of this specification. The drawings illustrate embodiments of the disclosure and, together with the description, serve to explain principles of the disclosure. In the drawings:

FIG. 1 illustrates a simplified conceptual diagram showing a rechargeable lithium battery according to one or more embodiments of disclosure.

FIG. 2 is a schematic illustration of a cylindrical battery according to one or more embodiments of the disclosure.

FIG. 3 is a schematic illustration of a prismatic battery according to one or more embodiments of the disclosure.

FIG. 4 is a schematic illustration of a pouch-type or kind battery according to one or more embodiments of the disclosure.

FIG. 5 is a schematic illustration of a pouch-type or kind battery according to one or more embodiments of the disclosure.

FIG. 6 illustrates an enlarged view of a positive electrode active material layer of a rechargeable lithium battery according to one or more embodiments of the disclosure.

FIG. 7 illustrates an enlarged view of a positive electrode active material layer of a rechargeable lithium battery according to one or more embodiments of the disclosure.

FIG. 8 illustrates a flow chart showing a method of manufacturing a positive electrode active material according to one or more embodiments of the disclosure.

FIG. 9A shows scanning electron microscope (SEM) images of a positive electrode active material according to one or more embodiments of the disclosure.

FIG. 9B shows SEM images of a positive electrode active material according to one or more embodiments of the disclosure.

FIG. 10A illustrates a transmission electron microscope (TEM) image of a positive electrode active material according to one or more embodiments of the disclosure.

FIG. 10B illustrates a TEM image of a positive electrode active material according to a comparative example of the disclosure.

## DETAILED DESCRIPTION

In order to sufficiently understand the configuration and effect of the disclosure, one or more embodiments of the disclosure will be described with reference to the accompanying drawings. It should be noted, however, that the disclosure is not limited to the following example embodiments, and may be implemented in one or more suitable forms. Rather, the example embodiments are provided only to let those skilled in the art fully know the scope of the disclosure.

In this description, it will be understood that, if (e.g., when) an element is referred to as being "on" another element, the element can be directly on the other element or intervening elements may be present therebetween. In the drawings, thicknesses of some components are exaggerated for effectively explaining the technical contents. Like reference numerals refer to like elements throughout, and duplicative descriptions thereof may not be provided in the specification.

Unless otherwise specially noted in this description, the expression of singular form may include the expression of plural form. In addition, unless otherwise specially noted, the phrase "A or B" may indicate "A but not B", "B but not A", and "A and B". The terms "comprises/includes" and/or "comprising/including" used in this description do not exclude the presence or addition of one or more other components.

As used herein, the term "combination thereof" may refer to a mixture, a stack, a composite, a copolymer, an alloy, a blend, or a reaction product of the constituents.

Unless otherwise especially defined in this description, a particle diameter may be an average particle diameter. In addition, a particle diameter indicates an average particle diameter ($D_{50}$) where a cumulative volume is about 50 volume % in a particle size distribution. The average particle diameter ($D_{50}$) may be measured by a suitable method (e.g., known to those skilled in the art), for example, by a particle size analyzer, a transmission electron microscope (TEM) image, or a scanning electron microscope (SEM) image. In one or more embodiments, a dynamic light-scattering measurement device is used to perform a data analysis, the number of particles is counted for each particle size range, and then from this, an average particle diameter ($D_{50}$) value may be obtained through a calculation. Dissimilarly, a laser scattering method may be utilized to measure the average particle diameter ($D_{50}$). In the laser scattering method, target particles are distributed in a dispersion solvent, introduced into a laser scattering particle size measurement device (e.g., MT3000 commercially available from Microtrac, Inc), irradiated with ultrasonic waves of 28 kHz at a power of 60 W, and then an average particle diameter ($D_{50}$) is calculated in the 50% standard of particle diameter distribution in the measurement device. Also, unless otherwise defined, in the present disclosure, the term "diameter" or "size" refers to an average diameter if (e.g., when) particles or crystallites are spherical and refers to an average major axis length if (e.g., when) particles or crystallites are non-spherical.

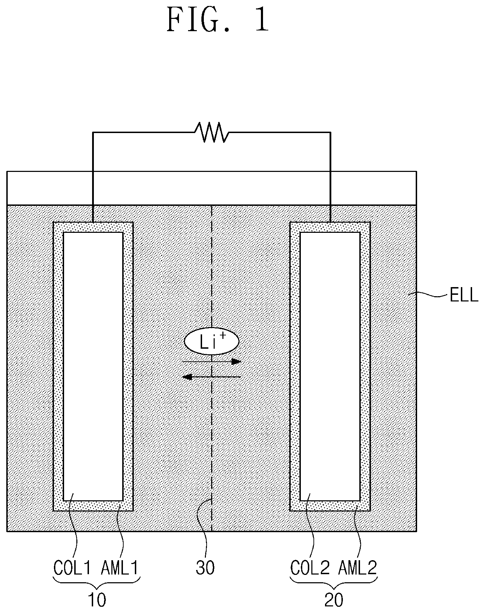

FIG. 1 illustrates a simplified conceptual diagram showing a rechargeable lithium battery according to one or more embodiments of the disclosure. Referring to FIG. 1, a rechargeable lithium battery may include a positive electrode 10, a negative electrode 20, a separator 30, and an electrolyte ELL.

The positive electrode 10 and the negative electrode 20 may be spaced and/or apart (e.g., spaced apart or separated) from each other across the separator 30. The separator 30 may be arranged between the positive electrode 10 and the negative electrode 20. The positive electrode 10, the negative electrode 20, and the separator 30 may be in contact with the electrolyte ELL. The positive electrode 10, the negative electrode 20, and the separator 30 may be impregnated in the electrolyte ELL.

The electrolyte ELL may be a medium by which lithium ions are transferred between the positive electrode 10 and the negative electrode 20. In the electrolyte ELL, the lithium ions may move through the separator 30 toward one of the positive electrode 10 or the negative electrode 20.

**Positive Electrode 10**

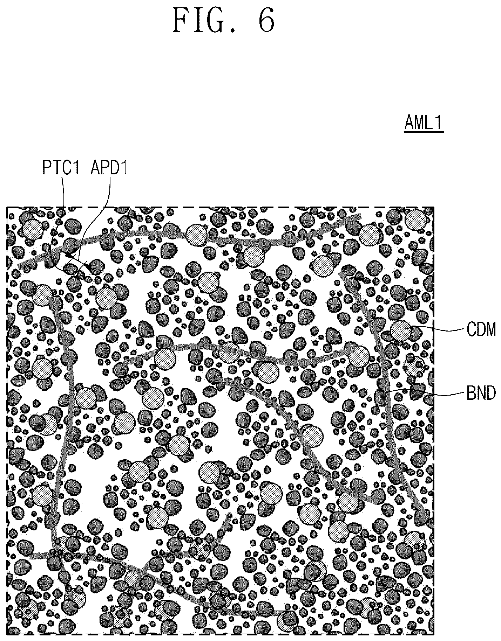

The positive electrode 10 for a rechargeable lithium battery may include a current collector COL1 and a positive electrode active material layer AML1 formed on the current collector COL1. The positive electrode active material layer AML1 may include a positive electrode active material and further include a binder and/or a conductive material (e.g., electron conductor). With reference to FIG. 6, the positive electrode active material layer AML1 according to one or more embodiments of the disclosure will be described in more detail. Aluminium (Al) may be used as the current collector COL1, but the disclosure is not limited thereto.

**Negative Electrode 20**

The negative electrode 20 for a rechargeable lithium battery may include a current collector COL2 and a negative electrode active material layer AML2 positioned on the current collector COL2. The negative electrode active material layer AML2 may include a negative electrode active material and may further include a binder and/or a conductive material (e.g., electron conductor).

For example, the negative electrode active material layer AML2 may include a negative electrode active material of about 90 wt% to about 99 wt%, a binder of about 0.5 wt% to about 5 wt%, and a conductive material of about 0 wt% to about 5 wt%, each based on 100 wt% of the negative electrode active material layer AML2.

The binder may serve to improve attachment of negative electrode active material particles to each other and also to improve attachment of the negative electrode active material to the current collector COL2. The binder may include a non-aqueous binder (e.g., binder in a non-aqueous solution), an aqueous binder (e.g., binder in a water solution), a dry binder, and/or a (e.g., any suitable) combination thereof.

The non-aqueous binder may include polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamide imide, polyimide, and/or a (e.g., any suitable) combination thereof.

The aqueous binder may include styrene-butadiene rubber, (meth)acrylated styrene-butadiene rubber, (meth) acrylonitrile-butadiene rubber, (meth)acrylic rubber, butyl rubber, fluoro elastomer, polyethylene oxide, polyvinyl pyrrolidone, polyepichlorohydrin, polyphosphazene, poly(meth)acrylonitrile, ethylene propylene diene copolymer, polyvinyl pyridine, chlorosulfonated polyethylene, latex, polyester resin, (meth)acrylic resin, phenolic resin, epoxy resin, polyvinyl alcohol, and/or a (e.g., any suitable) combination thereof.

If (e.g., when) an aqueous binder is used as the negative electrode binder, a cellulose-based compound capable of providing suitable viscosity may further be included. The cellulose-based compound may include one or more of carboxymethyl cellulose, hydroxypropylmethyl cellulose, methyl cellulose, and alkali metal salts thereof. The alkali metal may include Na, K, or Li.

The dry binder may include a fibrillizable (e.g., capable of being formed into the shape of a fiber) polymer material, for example, polytetrafluoroethylene, polyvinylidene fluoride, polyvinylidene fluoride-hexafluoropropylene copolymer, polyethylene oxide, and/or a (e.g., any suitable) combination thereof.

The conductive material may be used to provide an electrode with conductivity, and any suitable conductive material without causing chemical change of a battery may be used as the conductive material to constitute the battery. For example, the conductive material may include a carbon-based material such as natural graphite, artificial graphite, carbon black, acetylene black, Ketjen black, carbon fiber, carbon nano-fiber, and/or carbon nano-tube; a metal powder or metal fiber including one or more from among copper, nickel, aluminium, and silver; a conductive polymer such as a polyphenylene derivative; and/or a (e.g., any suitable) mixture thereof.

The current collector COL2 may include a copper foil, a nickel foil, a stainless-steel foil, a titanium foil, a nickel foam, a copper foam, a polymer substrate coated with a conductive metal, and/or a (e.g., any suitable) combination thereof.

**Negative Electrode Active Material**

The negative electrode active material in the negative electrode active material layer AML2 may include a material that can reversibly intercalate and deintercalate lithium ions, lithium metal, a lithium metal alloy, a material that can dope and de-dope lithium, or transition metal oxide.

The material that can reversibly intercalate and deintercalate lithium ions may include a carbon-based negative electrode active material, for example, crystalline carbon, amorphous carbon, and/or a (e.g., any suitable) combination thereof. For example, the crystalline carbon may include graphite such as non-shaped (e.g., irregularly shaped), sheet-shaped, flake-shaped, sphere-shaped, or fiber-shaped natural or artificial graphite, and the amorphous carbon may include soft carbon, hard carbon, mesophase pitch carbon, and/or calcined coke.

The lithium metal alloy may include an alloy of lithium and metal that is selected from among Na, K, Rb, Cs, Fr, Be, Mg, Ca, Sr, Si, Sb, Pb, In, Zn, Ba, Ra, Ge, Al, and Sn.

The material that can dope and de-dope lithium may include a Si-based negative electrode active material or a Sn-based negative electrode active material. The Si-based negative electrode active material may include silicon, silicon-carbon composite, $SiO_x$ (where $0<x\leq2$), Si-Q alloy (where Q is alkali metal, alkaline earth metal, Group 13 element, Group 14 element (excluding Si), Group 15 element, Group 16 element, transition metal, a rare-earth element, and/or a (e.g., any suitable) combination thereof), and/or a (e.g., any suitable) combination thereof. The Sn-based negative electrode active material may include Sn, $SnO_x$ ($0 < x \leq 2$, e.g., $SnO_2$), a Sn-based alloy, a combination thereof.

The silicon-carbon composite may be a composite of silicon and amorphous carbon. According to one or more embodiments, the silicon-carbon composite may have a structure in which the amorphous carbon is coated on a surface of the silicon particle. For example, the silicon-carbon composite may include a secondary particle (core) in which primary silicon particles are assembled (agglomerated), and an amorphous carbon coating layer (shell) positioned on a surface of the secondary particle. The amorphous carbon may also be positioned between the primary silicon particles, and for example, the primary silicon particles may be coated with the amorphous carbon. The secondary particles may be dispersed in an amorphous carbon matrix.

The silicon-carbon composite may further include crystalline carbon. For example, the silicon-carbon composite may include a core including crystalline carbon and silicon particles and may also include an amorphous carbon coating layer positioned on a surface of the core.

The Si-based negative electrode active material or the Sn-based negative electrode active material may be used in combination with a carbon-based negative electrode active material.

**Separator 30**

Based on type (kind) of the rechargeable lithium battery, the separator 30 may be present between positive electrode 10 and the negative electrode 20. The separator 30 may include one or more from among polyethylene, polypropylene, and polyvinylidene fluoride, and may have a multi-layered structure such as a polyethylene/polypropylene bi-layered separator, a polyethylene/polypropylene/polyethylene tri-layered separator, and a polypropylene/polyethylene/polypropylene tri-layered separator.

The separator 30 may include a porous substrate and a coating layer positioned on one or opposite surfaces of the porous substrate. The coating layer includes an organic material, an inorganic material, and/or a (e.g., any suitable) combination thereof.

The porous substrate may be a polymer layer including one selected from among polyolefin such as polyethylene and/or polypropylene, polyester such as polyethylene terephthalate and/or polybutylene terephthalate, polyacetal, polyamide, polyimide, polycarbonate, polyetherketone, polyaryletherketone, polyetherimide, polyamideimide, polybenzimidazole, polyethersulfone, polyphenyleneoxide, cyclic olefin copolymer, polyphenylenesulphide, polyethylene naphthalate, glass fiber, and polytetrafluoroethylene (e.g., Teflon), or may be a copolymer or mixture including two or more of the materials mentioned above.

The organic material may include a polyvinylidenefluoride-based copolymer or a (meth)acrylic copolymer.

The inorganic material may include an inorganic particle selected from among $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, Boehmite, and/or a (e.g., any suitable) combination thereof, but the disclosure is not limited thereto.

The organic material and the inorganic material may be present as a mixture in one coating layer or may be present as a stack of a coating layer including the organic material and a coating layer including an inorganic material.

**Electrolyte ELL**

The electrolyte ELL for the rechargeable lithium battery may include a non-aqueous organic solvent and a lithium salt.

The non-aqueous organic solvent may serve as a medium for transmitting ions that participate in an electrochemical reaction of the battery.

The non-aqueous organic solvent may include a carbonate-based solvent, an ester-based solvent, an ether-based solvent, a ketone-based solvent, an alcohol-based solvent, an aprotic solvent, and/or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), and/or butylene carbonate (BC).

The ester-based solvent may include methyl acetate, ethyl acetate, n-propyl acetate, dimethyl acetate, methyl propionate, ethyl propionate, decanolide, mevalonolactone, valerolactone, and/or caprolactone.

The ether-based solvent may include dibutyl ether, tetraethylene glycol dimethyl ether (tetraglyme), bis(2-methoxyethyl) ether (diglyme), dimethoxyethane, 2-methyltetrahydrofuran, 2.5-dimethyltetrahydrofuran, and/or tetrahydrofuran. The ketone-based solvent may include cyclohexanone. The alcohol-based solvent may include ethyl alcohol and/or isopropyl alcohol. The aprotic solvent may include nitriles such as R-CN (where R is a hydrocarbon group having a C2 to C20 linear, branched, or cyclic structure and may include a double bond, an aromatic ring, and/or an ether group); amides such as dimethylformamide; dioxolanes such as 1,3-dioxolane and/or 1.4-dioxolane; and/or sulfolanes.

The non-aqueous organic solvent may be used alone or in a mixture of two or more substances.

In addition, if (e.g., when) a carbonate-based solvent is used, a cyclic carbonate and a chain carbonate may be mixed and used, and the cyclic carbonate and the chain carbonate may be mixed in a volume ratio of about 1:1 to about 1:9.

The lithium salt may be a material that is dissolved in the non-aqueous organic solvent to serve as a supply source of lithium ions in a battery and plays a role in enabling a basic operation of a rechargeable lithium battery and in promoting the movement of lithium ions between the positive and negative electrodes. The lithium salt may include, for example, at least one selected from among $LiPF_6$, $LiBF_4$, $LiSbF_6$, $LiAsF_6$, $LiClO_4$, $LiAlO_2$, $LiAlCl_4$, $LiPO_2F_2$, LiCl, Lil, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (where x and y are each integers of 1 to 20), lithium trifluoromethane sulfonate, lithium tetrafluoroethanesulfonate, lithium difluoro(oxalato)borate (LiDFOB), lithium difluorobis(oxalato)phosphate (LiDFBOP), and lithium bis(oxalato)borate (LiBOB).

**Rechargeable Lithium Battery**

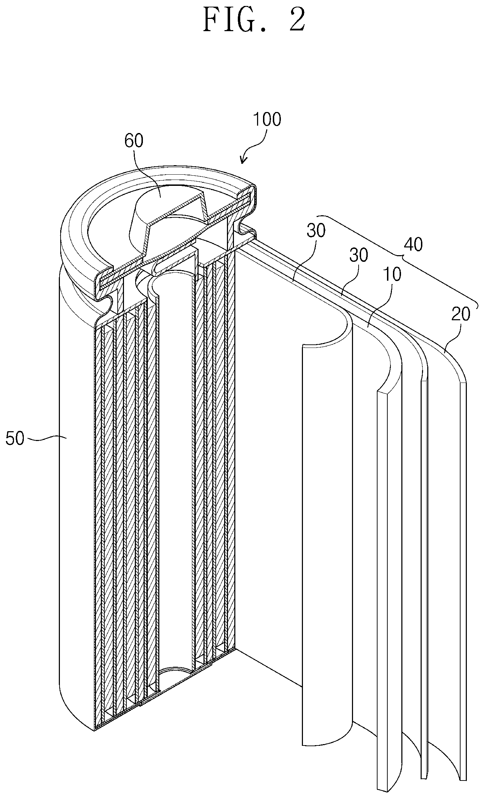

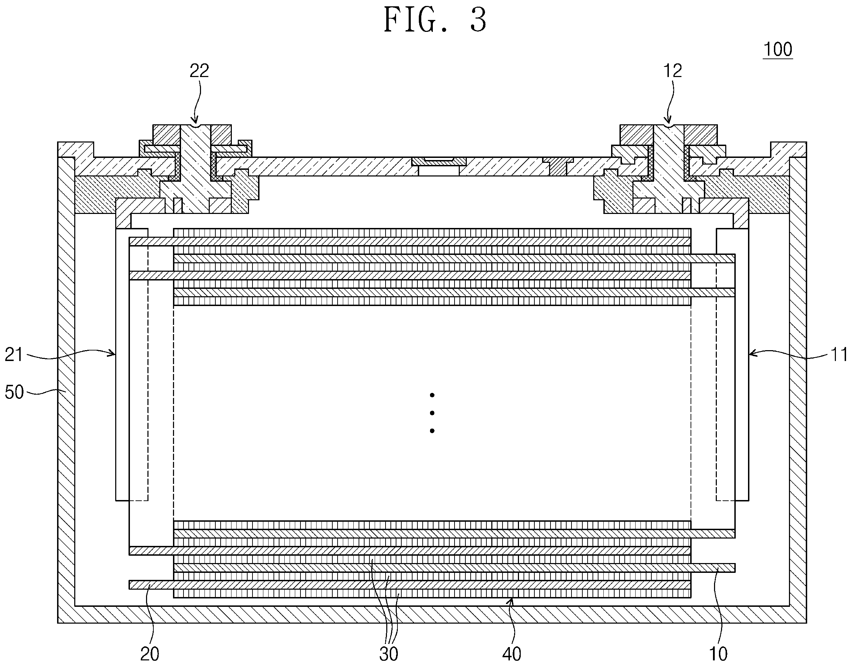

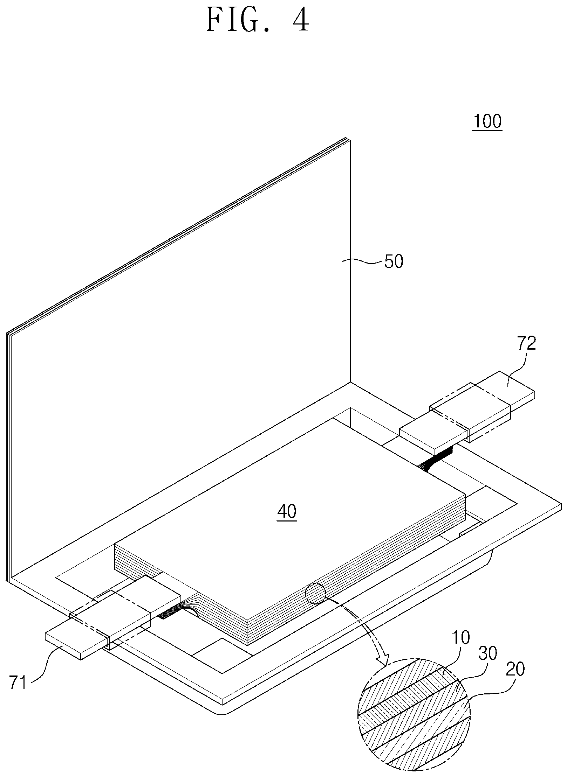

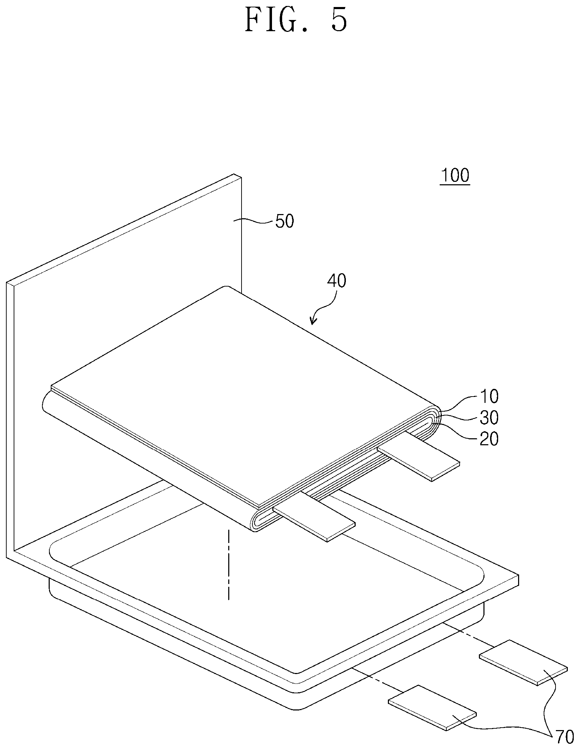

Based on shape of a rechargeable lithium battery, the rechargeable lithium battery may be classified into cylindrical, prismatic, pouch, and coin types (kinds). FIGS. 2 to 5 illustrate simplified diagrams showing a rechargeable lithium battery according to one or more embodiments, with FIG. 2 showing a cylindrical battery, FIG. 3 showing a prismatic battery, and FIGS. 4 and 5 each showing pouch-type (kind) batteries. Referring to FIGS. 2 to 4, a rechargeable lithium battery 100 may include an electrode assembly 40 in which a separator 30 is interposed between a positive electrode 10 and a negative electrode 20, and may also include a casing 50 in which the electrode assembly 40 is accommodated. The positive electrode 10, the negative electrode 20, and the separator 30 may be impregnated in an electrolyte. The rechargeable lithium battery 100 may include a sealing member 60 that seals the casing 50 as illustrated in FIG. 2. In addition, as illustrated in FIG. 3, the rechargeable lithium battery 100 may include a positive electrode lead tab 11, a positive electrode terminal 12, a negative electrode lead tab 21, and a negative electrode terminal 22. As shown in FIGS. 4 and 5, the rechargeable lithium battery 100 may include an electrode tab 70, or a positive electrode tab 71 and a negative electrode tab 72. The electrode tabs 70, 71 and 72 serve as an electrical path for conducting a current generated in the electrode assembly 40 to the outside.

The rechargeable lithium battery according to one or more embodiments of the disclosure may be applied to automotive vehicles, mobile phones, and/or any other electrical devices, but the disclosure is not limited thereto.

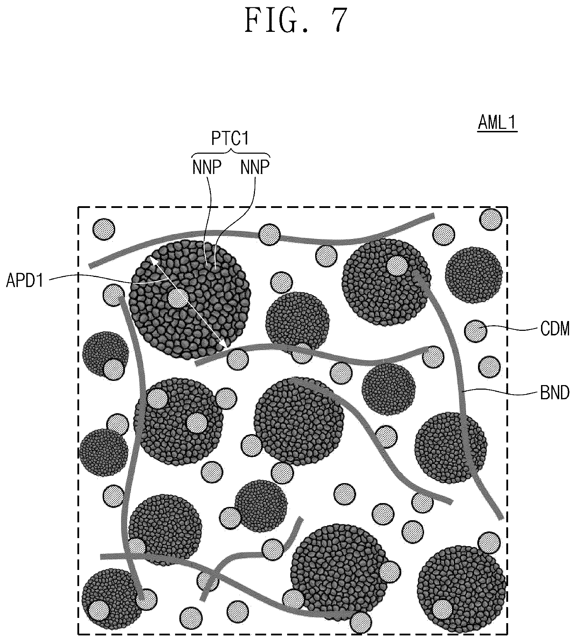

FIGS. 6 and 7 each illustrate enlarged views showing a positive electrode active material layer of a rechargeable lithium battery according to one or more embodiments of the disclosure. Referring to FIGS. 6 and 7, the positive electrode active material layer (see AML1 of FIG. 1) includes a first particle PTC1, and may also include a conductive material CDM and a binder BND. A plurality of first particles PTC1 constitute a positive electrode active material according to the invention.

The positive electrode active material layer AML1 may further include an additive capable of serving as a sacrificial positive electrode.

An amount of the positive electrode active material (e.g., the plurality of first particles PTC1) in the positive electrode active material layer AML1 may be from about 90 wt% to about 99 wt% relative to 100 wt% of the positive electrode active material layer AML1. Amounts of the binder BND and the conductive material CDM may each be about 0.5 wt% to about 5 wt% relative to 100 wt% of the positive electrode active material layer AML1.

The binder BND may bind the first particle PTC1 and the conductive material CDM to each other. For example, the binder BND may include at least one selected from among polyvinyl alcohol, carboxymethyl cellulose, hydroxypropyl cellulose, diacetyl cellulose, polyvinylchloride, carboxylated polyvinylchloride, polyvinylfluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, and nylon, but the disclosure is not limited thereto.

The conductive material CDM may be used to improve conductivity of the positive electrode active material layer AML1. Any suitable conductive material that does not cause a chemical change of the positive electrode active material layer AML1 may be used without limitation as the conductive material CDM. For example, the conductive material CDM may include a carbon-based material such as natural graphite, artificial graphite, carbon black, acetylene black, Ketjen black, carbon fiber, carbon nano-fiber, and/or carbon nano-tube; a metal powder or metal fiber containing one or more from among copper, nickel, aluminium, and silver; a conductive polymer such as a polyphenylene derivative; and/or a (e.g., any suitable) mixture thereof.

The first particle PTC1 will be discussed in more detail below.

**First Particle PTC1**

The first particle PTC1 includes an olivine-based lithium compound represented by Chemical Formula 1:

$$Li_{a1}Mn_xFe_{1-x}M_yPO_4$$

In Chemical Formula 1, x and y satisfy the relationship as follows: $0.8 \leq a1 \leq 1.2$, $0.2 < x < 0.8$ and $0.0001 \leq y \leq 0.05$. M is at least one element selected from among Ti, Al, Mg, Zr, V, Zn, Nb, K, Y, B, and Cu. M is a dopant doped in the first particle PTC1. For example, M may include Ti and/or M may be present in an amount of about 500 ppm to about 10,000 ppm, e.g. $0.0005 \leq y \leq 0.01$, or about 500 ppm to about 6,000 ppm, e.g. $0.0005 \leq y \leq 0.006$. M may control sizes of primary particles to be substantially uniform, and may improve the charge-discharge efficiency, low-temperature characteristics, and lifetime properties of rechargeable lithium batteries. The primary particle will be further discussed in more detail.

From a Raman spectrum obtained by Raman spectroscopy for the first particle PTC1, a ratio $(I_D/I_G)$ is from about 0.5 to about 1.5, preferably from about 0.9 to about 1.3.

The Raman spectrum may be obtained using a Raman spectroscope. $I_G$ refers to the intensity of the G peak present at a wave number of about $1590 \pm 10 cm^{-1}$ in the Raman spectrum, and $I_D$ refers to the intensity of the D peak present at a wave number of about $1340 \pm 10 cm^{-1}$ in the Raman spectrum.

The G peak according to the present embodiment may indicate a peak originated from crystalline carbon, and the D peak according to the present embodiment may denote a peak originated from amorphous carbon. The Raman spectrum ratio $(I_D/I_G)$ according to the disclosure may determine (e.g., represent) the degree of crystallization of carbon.

There may be an optimum or desirable range for the Raman spectrum ratio $(I_D/I_G)$, and if (e.g., when) the ratio $(I_D/I_G)$ falls within the desirable range, excellent or suitable electrode plate slurry characteristics, high conductivity, and improved electrochemical properties may be obtained.

A lower Raman spectrum ratio $(I_D/I_G)$ may indicate an increased ratio of crystalline carbon to amorphous carbon, which may therefore lead to an improvement in conductivity, whereas a higher Raman spectrum ratio $(I_D/I_G)$ may indicate an increased amount of amorphous carbon, which may lead to deterioration in electrode plate slurry characteristics and an increase in surface resistance.

According to the present invention, if (e.g., when) the Raman spectrum ratio $(I_D/I_G)$ is less than about 0.5, electrode plate slurry characteristics may deteriorate (reduction in solid content (e.g., amount) and increase in viscosity), and an increase in resistance (overvoltage caused by reduction in ion conductivity) may increase a dissolution amount of metal during lifetime (e.g., during operation of the cell), which may result in a deterioration in cell performance and a reduction in durability of electrodes. In contrast, if (e.g., when) the Raman spectrum ratio $(I_D/I_G)$ is greater than about 1.5, a coating layer of crystalline carbon on a particle surface may significantly increase to cause an increase in resistance (hindrance of intercalation and deintercalation of lithium ions), which may result in a decrease in reversible capacity (specific capacity) of positive electrodes and a reduction in durability of electrodes.

In one or more embodiments, the first particle PTC1 may include a coating layer on a surface thereof. The coating layer may cover an entirety or a portion of the surface of the first particle PTC1. For example, the coating layer may include carbon and/or a carbon-containing compound. The first particle PTC1 may have improved structural stability and increased electric conductivity due to the coating layer.

The first particle PTC1 may further include carbon originated from the coating layer and/or a grain boundary coating layer (or coating layer on surfaces of primary particles). An amount of carbon in the first particle PTC1 may range from about 1.1 wt% to about 2.8 wt% based on a total 100 wt% of the first particle.

If (e.g., when) the amount of carbon in the first particle PTC1 is less than about 1.1 wt%, carbon may not be evenly distributed throughout the interior of an active material particle (e.g., first particle PTC1). If (e.g., when) the amount of carbon is present in an excessive amount of greater than about 2.8 wt%, a thick carbon coating layer may be generated on a surface of an active material particle. For example, the first particle PTC1 includes an olivine-based lithium compound represented by Chemical Formula 1 and may also include a carbon-containing coating layer. An amount of carbon in the first particle PTC1 may range from about 1.1 wt% to about 2.8 wt%. Furthermore, a ratio ($I_D/I_G$) of Raman spectrum obtained by Raman spectroscopy for the first particle PTC1 is from about 0.5 to about 1.5, preferably from about 0.9 to about 1.3.

As the positive electrode active material of the disclosure includes the first particle PTC1, it may be possible to increase said material's pellet density, capacity, and energy density. In one or more embodiments, the positive electrode active material may have a pellet density (or compressed density) of about 1.8 g/cc to about 2.8 g/cc or about 2.0 g/cc to about 2.6 g/cc. The pellet density of the positive electrode active material of the present invention may be measured using the following method. First, a sample of the pellet is prepared, and the mass of the sample is accurately measured using a precise balance. Then, the volume of the pellet is determined by either directly measuring its dimensions or by using the displacement method. In the displacement method, the pellet is placed in a water-filled displacement vessel, and the volume of displaced water is measured. The volume of the displaced water corresponds to the volume of the pellet. The pellet density is then calculated by dividing the mass by the measured volume. Specifically, the pellet density is determined using the following formula:

$$\text{Pellet Density} = \text{Mass} / \text{Volume}$$

During measurement, the sample should be dried at room temperature to ensure that moisture does not affect the measurement accuracy. Furthermore, it is important to ensure that the volume measurement is accurate by using precise volumetric measurement instruments or a reliable displacement method. Finally, to ensure the reliability of the results, the pellet density should be measured through repeated experiments, and the average value should be calculated.

The first particle PTC1 may have a first average particle diameter APD1. The first average particle diameter APD1 may vary according to the embodiments illustrated in FIG. 6 or 7.

In one or more embodiments, referring to FIG. 6, the first particle PTC1 may be in a form of single particle. In this description, the term "single particle" may denote an individual particle without a grain boundary or interface therein. The single particle may indicate one particle, a monolith structure, a single unitary structure, or a non-aggregated (e.g., non-agglomerated) particle, in which particles are not aggregated (e.g., non-agglomerated) together with one another but present as an independent phase in terms of morphology. For example, a single particle may be a single crystal. In one or more embodiments, the single particle may be a particle containing two or more (e.g., several) crystals. That is, the single particle may have a single crystal or a polycrystalline structure. The single particle may be independently divided, e.g., may not be agglomerated with another particle. In one or more embodiments, the first particle may have a form of a cluster of particles in which 2 to 100 independent particles are attached to each other. Unlike the secondary particles to be discussed in more detail below, such a cluster of particles does not have a spherical or oval shape and is irregularly shaped with the particles randomly grouped together.

The first particle PTC1 may be a nano-type (kind) positive electrode active material, and may include at least one primary particle. The first particle PTC1 may exist as a single primary particle (e.g., in the form of a single particle), or may have a spherical form in which primary particles are aggregated (e.g., agglomerated) (e.g., in the form of a secondary particle), or may have a random shape in which primary particles are aggregated (e.g., agglomerated) (e.g., as a cluster of primary particles). Here, the primary particles refer to the individual particles that aggregated (e.g., agglomerated) together to form the secondary particles, or the single particle when the first particle PTC1 exists in the form of a non-aggregated single particle. For example, if (e.g., when) the first particle PTC1 is a single particle, the first average particle diameter APD1 of the first particle PTC1 may be from about 0.2 $\mu$m to about 2.5 $\mu$m. A minimum (or smallest) particle diameter of the first particle PTC1, or a size of the primary particle, may be from about 10 nm to about 200 nm.

In one or more embodiments, the average particle diameter may be measured with a particle size analyzer. The average particle diameter may refer to a diameter ($D_{50}$) of particles having a cumulative volume of 50 vol% in a particle size distribution. In one or more embodiments, the minimum (e.g., smallest) particle diameter, or a size of the primary particle, may refer to a diameter measured by randomly selecting approximately 30 primary particles from an electron microscope image of the first particle PTC1.

If (e.g., when) the first particle PTC1 is a single particle, as the first average particle diameter APD1 is small (e.g., extremely small), a large amount of the binder BND may be desired or required to attach the first particle PTC1 to a current collector (see COL1 of FIG. 1). For example, an amount of the binder BND may be from about 3 wt% to about 5 wt% relative to 100 wt% of the positive electrode active material layer AML1.

In one or more embodiments, referring to FIG. 7, the first particle PTC1 may have a polycrystalline form, and may include a secondary particle in which at least two primary particles NNP are aggregated (e.g., agglomerated). For example, a single first particle PTC1 may include a plurality of primary particles NNP that are aggregated (e.g., agglomerated) with each other. The first particle PTC1 may have a spherical or oval shape.

In one or more embodiments, the first particle PTC1 may further include a grain boundary coating layer on a surface of each of the primary particles NNP. The grain boundary coating layer may be present within the first particle PTC1. The grain boundary coating layer may be coated along an interface between the primary particles NNP within the first particle PTC1. For example, the grain boundary coating layer may refer to a material coated on a grain boundary (or interface between adjacent primary particles) within the first particle PTC1. For example, the primary particles may have the grain boundary coating layer formed on a surface thereof, and accordingly, the grain boundary coating layer is present at an interface between adjacent primary particles inside the first particle PTC1. The grain boundary coating layer may include carbon and/or a carbon-containing compound.

The interior or inside of the first particle PTC1 may refer to an entire inner portion except for a surface of the first particle PTC1. For example, the interior of the first particle PTC1 may refer to an entire inside from an outer surface of the first particle PTC1 to a depth of about 10 nm, or a portion from a depth of about 10 nm to a depth of about 2 $\mu$m. For example, the inside of the first particle PTC1 may refer to an entire remaining region of the first particle PTC1 after excluding the region from the outer surface to about 10 nm depth from the outer surface of the first particle PTC1, or a region from about 10 nm depth to about 2 $\mu$m depth from the outer surface of the first particle PTC1.

If the first particle PTC1 further includes a grain boundary coating layer, structural stability may be reinforced and a substantially uniform coating layer may be formed on the surface of the first particle PTC1. In addition, if the first particle PTC1 further includes a grain boundary coating layer, the first particle PTC1 may have an excellent or suitable electric conductivity.

The first particle PTC1 may have a spherical shape in which nano-sized primary particles NNP are aggregated (e.g., agglomerated). As the first particle PTC1 may be constituted by primary particles NNP that are densely aggregated (e.g., agglomerated) with each other, the first particle PTC1 may exhibit desirable properties. The first particle PTC1 may have a spherical or oval shape.

If (e.g., when) the first particle PTC1 has a secondary particle form, the first average particle diameter APD1 of the first particle PTC1 may be from about 0.2 $\mu$m to about 20 $\mu$m.

In one or more embodiments, an average particle diameter may be measured with a particle size analyzer. An average particle diameter may refer to a diameter ($D_{50}$) of particles having a cumulative volume of 50 vol% in a particle size distribution.

The first particle PTC1 may include a plurality of primary particles NNP that are aggregated (e.g., agglomerated) with each other. The primary particles NNP may have a particle size of about 10 nm to about 400 nm. In one or more embodiments, the minimum (e.g., smallest) particle diameter, or a size of the primary particle, may refer to a diameter measured by randomly selecting approximately 30 primary particles from an electron microscope image of the first particle PTC1.

The first particle PTC1 may have a porosity of about 20% to about 60%. Here, porosity (n) may be defined as the pore volume ($V_p$) divided by the total volume (Vt) of particles, or

$$n = \frac{V_p}{V_t}.$$

The pore volume ($V_p$) may be measured using the Displacement Method or Gas Pycnometry. For example, the particles can be filled with a gas or liquid, and the volume occupied by the gas or liquid is measured to calculate the pore volume. The total volume ($V_t$) refers to the overall volume of the particles, which can be measured using mechanical methods or gas pycnometry. Using gas pycnometry, both the total volume of the particles and the pore volume can be differentiated and measured.

A span value of the first particle PTC1 analyzed with a particle size analyzer may range from about 0.5 to about 7.

The "span" value may refer to a value obtained by using a calculation formula ($D_{90}$-$D_{10}$)/$D_{50}$ where $D_{10}$, $D_{50}$, and $D_{90}$ are indicators representing particle sizes. That is, the span value is obtained by dividing a difference between $D_{90}$ and $D_{10}$ by $D_{50}$, in which $D_{10}$, $D_{50}$ and $D_{90}$ represent the size of particles at a cumulative volume of about 10 vol%, 50 vol% and 90 vol% in a particle size distribution, respectively. Here, the span value represents the uniformity of particle sizes.

In the context of the present disclosure and unless otherwise defined, the first particle PTC1 can be in either a single particle form or a secondary particle form. The secondary particle form and the single particle form of the first particle PTC1 differ in their structure and morphology. The single particle form refers to an individual particle without grain boundaries or interfaces, which can be a single crystal or a polycrystalline structure, and exists independently without aggregation. In contrast, the secondary particle form is composed of multiple primary particles aggregated together, often resulting in a spherical or oval shape. This aggregation includes a grain boundary coating layer that enhances structural stability and electrical conductivity. While single particles typically may have smaller average diameters (about 0.2 $\mu$m to about 2.5 $\mu$m) and may require more binder to attach to a current collector, secondary particles may have larger average diameters (about 0.2 $\mu$m to about 20 $\mu$m) and exhibit desirable properties due to the dense aggregation of primary particles.

## Manufacture of Positive Electrode Active Material

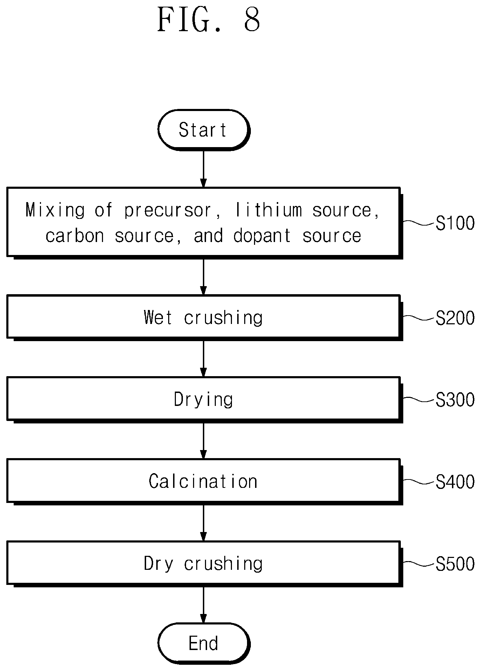

FIG. 8 illustrates a flow chart showing a method of manufacturing a positive electrode active material according to one or more embodiments of the disclosure. With reference to FIG. 8, a method of manufacturing the first particle PTC1 according to one or more embodiments of the disclosure will be described in more detail.

A manganese iron phosphate precursor, a lithium source, a carbon source, and a dopant source may be added to and mixed in a solvent (S100). For example, the solvent may be water or ethanol.

The manganese iron phosphate precursor may be a compound containing all of manganese (Mn), iron (Fe), and phosphorus (P), a mixture of a compound containing manganese (Mn) and a compound containing iron (Fe) and phosphorus (P), and/or a (e.g., any suitable) mixture of a compound containing manganese (Mn), a compound containing iron (Fe), and a compound containing phosphorus (P). For example, the manganese iron phosphate precursor may include $Mn_xFe_{1-x}PO_4 \cdot H_2O$, a mixture of $MnCO_3$ and $FePO_4 \cdot H_2O$, and/or a (e.g., any suitable) mixture of $MnCO_3$, $FeSO_4$, and $H_3PO_4$. Herein, x is about 0.2 to about 0.8.

The lithium source may include at least one selected from among lithium oxide, lithium hydroxide, lithium chloride, lithium nitrate, lithium nitrite, lithium formate, lithium acetate, lithium oxalate, lithium carbonate, lithium phosphate, lithium hydrogen phosphate, lithium dihydrogen phosphate, and lithium citrate.

The carbon source may include at least one selected from among glucose, sucrose, fructose, cellulose, starch, citric acid, polyacrylic acid, polyethylene glycol, and dopamine.

The dopant source may include oxide-containing dopant metal and/or chloride-containing dopant metal. The dopant source includes at least one selected from among Ti, Al, Mg, Zr, V, Zn, Nb, K, Y, B, and Cu. In one or more embodiments, the dopant source may include a titanium compound.

The carbon source may be mixed in an amount of about 1wt% to about 20 wt%, or about 1 wt% to about 10 wt% relative to the total weight of the mixture. If (e.g., when) the carbon source is added in a smaller amount of less than about 1 wt%, carbon may not be evenly distributed throughout the interior of an active material particle. If (e.g., when) the carbon source is added in an excessive amount of greater than about 20 wt%, or about 10 wt%, a thick carbon coating layer may be generated on a surface of an active material particle.

The dopant source may be mixed in an amount of about 0.01 wt% to about 2 wt%, or about 0.01 wt% to about 1 wt%, relative to the total weight of the mixture. If (e.g., when) the dopant source is added in an amount of less than about 0.01 wt%, there may be a minimal effect of conductivity (e.g., the improvement in conductivity may not be sufficient). If (e.g., when) the dopant source is added in an amount of greater than about 2 wt%, or about 1 wt%, there may be a reduction in coating uniformity in an active material particle.

A wet crushing may be performed on the mixture (S200). The wet crushing may use a suitable wet mill capable of controlling temperatures. For example, the wet crushing may use at least one selected from among a beads mill, a ball mill, an attrition mill, an apex mill, a super mill, and a basket mill. During the wet crushing process, particles in the mixture may be crushed to fine sizes.

In one or more embodiments of the disclosure, the wet crushing (S200) may not be provided. For example, the wet crushing (S200) performed on precursor particles may not be provided to maximize or increase an average particle diameter of a first particle PTC1 which will be eventually manufactured.

A solvent may be removed from the mixture to form a dried mixture (S300).

If (e.g., when) the first particle PTC1 of FIG. 6 (e.g., in the form of single particles) is manufactured in one or more embodiments of the disclosure, the formation of the dried mixture may include performing a direct evaporation on the mixture. For example, the direct evaporation may include a static drying or a spray drying.

If (e.g., when) the first particle PTC1 of FIG. 7 (e.g., in the form of secondary particles) is manufactured in one or more embodiments of the disclosure, the formation of the dried mixture may include performing a spray drying on the mixture. The spray drying may use a suitable (e.g., commonly available) spray dryer. For example, the spray drying may use at least one selected from among an ultrasonic spray dryer, an air nozzle spray dryer, an ultrasonic nozzle spray dryer, a filter expansion aerosol generator, and an electrostatic spray dryer.

The particles, which may have been reduced to primary particle sizes through the wet crushing process, may be aggregated (e.g., agglomerated) during the spray drying process to form a secondary particle. Thus, a flow rate and velocity of carrier gas, temperature, and residence time and internal pressure in a reactor may be adjusted during the spray drying process to form a first particle PTC1 in the form of a secondary particle having a target (e.g., set) size.

In one or more embodiments, the mixture targeted for the spray drying may have a total solid content (e.g., amount) in a range of about 20 wt% to about 40 wt%. The solid content (e.g., amount) may refer to the weight percentage of a solid material (or a dried mixture) remaining after the evaporation of a solvent relative to the total weight of a mixture (or a spray solution prior to the evaporation of the solvent). For example, the spray solution may have a solid content of about 30 wt%

If (e.g., when) the solid content (e.g., amount) is less than about 20 wt%, an average particle diameter of the first particle PTC1 may be reduced, and productivity may be decreased. If (e.g., when) the solid content (e.g., amount) is greater than about 40 wt%, it may be difficult to adjust the average particle diameter of the first particle PTC1 and the first particle PTC1 may have a large particle size deviation (e.g., from the desired or set target particle size).

The spray solution according to the present embodiment may have a viscosity at 25 °C of about 1,500 mPa·s to about 2,500 mPa·s at the aforementioned solid content (e.g., amount). For example, the spray solution may have a viscosity at 25 °C of about 2,000 mPa·s.

In one or more embodiments, a feed rate for the spray drying may be from about 0.1 kg/min to about 0.9 kg/min. A feed rate of the spray drying may refer to a weight of the solid content (e.g., amount) in the spray solution fed per hour. For example, if (e.g., when) the spray solution with about 20 wt% of the solid content (e.g., amount) is fed at a rate of 1 kg per one minute, the feed rate may be about 0.2 kg/min. In one or more embodiments of the disclosure, the feed rate for the spry drying may be about 0.5 kg/min.

In one or more embodiments, the spray drying may be performed at a temperature of about 100 °C to about 300 °C. For example, the spray drying may be performed at a temperature in a range of about 200 °C to about 300 °C, from greater than about 200 °C to about equal to or less than about 300 °C, or from about 230 °C to about 270 °C. A spray gas (e.g., air) used in the spray drying may be introduced (injected) at a first temperature and exhausted (discharged) at a second temperature. For example, the first temperature may be from about 200 °C to about 250 °C. The second temperature may range from 80 °C to about 150 °C.

A feed pressure of the spray solution may be from about 0.2 MPa to about 0.7 MPa. For example, the feed pressure of the spray solution may be about 0.5 MPa.

If (e.g., when) the feed rate, the feed pressure, and the temperature of the spray drying satisfy the ranges above, the first particle PTC1 may have a spherical shape and a target (e.g., set) porosity.

The spray solution of the spray drying may have a flow rate of about 30 mL/min to about 80 mL/min. If (e.g., when) the flow rate is less than about 30 mL/min, problems such as nozzle clogging and/or productivity reduction may occur. If (e.g., when) the flow rate is greater than about 80 mL/min, moisture may be condensed in a spray dryer and thus problems such as incomplete drying of the mixture may occur. The feed pressure of the spray solution may be from about 0.3 MPa to about 0.7 MPa. For example, the feed pressure of the spray solution may be about 0.5 MPa.

The dried mixture may be calcined under an inert environment (S400). The inert environment may be a nitrogen environment and/or an argon environment. The calcination process may be carried out in a total of two stages, at temperatures in the range of about 300 °C to about 800 °C. A first calcination process may be performed at a temperature of about 300 °C to about 600 °C. The first calcination process may be performed for about 1 hour to about 10 hours or about 2 hours to about 6 hours. Immediately thereafter, a second calcination process may be performed at a temperature of about 600 °C to about 800 °C. The second calcination process may be performed for about 4 hours to about 20 hours or about 6 hours to about 12 hours. The calcination of the dried mixture may form the first particle PTC1 including the compound represented by Chemical Formula 1 above. If (e.g., when) the calcination process temperature is less than about 600 °C, a low reaction temperature may cause the formation of a phase other than a complete olivine-based phase, and in addition, carbon coated on particle surfaces may not be crystallized but instead may remain largely in the form of amorphous carbon. If (e.g., when) the calcination process temperature is greater than about 800 °C, carbon coated on particle surfaces may become excessively (or substantially) crystallized to form a thick carbon coating layer, which may hinder intercalation and deintercalation of lithium ions to thereby induce degradation in electrochemical performance. Further, a particle size may increase and lead to an increase in resistance.

A dry crushing process may be performed on the calcined first particle PTC1 (S500). The calcined mixture may be crushed using an air jet mill.

If (e.g., when) the first particle PTC1 of FIG. 6 (e.g., in the form of single particles) is manufactured in one or more embodiments of the disclosure, the calcined mixture may be crushed at a rotation speed of equal to or greater than about 7,000 rpm. For example, the calcined mixture may be crushed at a rotation speed of about 7,000 rpm to about 10,000 rpm or about 7,500 rpm to about 9,000 rpm. Thus, the first particle PTC1 may have a single particle form as shown in FIG. 6.

If (e.g., when) the first particle PTC1 of FIG. 7 (e.g., in the form of secondary particles) is manufactured in one or more embodiments of the disclosure, the calcined mixture may be crushed at a rotation speed of about 0 rpm to about 7,000 rpm. For example, the calcined mixture may be crushed at a rotation speed of about 4,000 rpm to about 7,000 rpm, about 4,000 rpm to about 6,000 rpm, or about 4,500 rpm to about 5,000 rpm. Differently from the manufacture of the positive electrode active material of FIG. 6, the post-calcination crushing (e.g., act or task) step (S500) may be performed under relatively mild conditions. If (e.g., when) the positive electrode active material of FIG. 7 is manufactured, for example, the dry crushing (S500) may not be provided. If (e.g., when) the rotation speed of the crushing (e.g., act or task) step (S500) satisfies the ranges above, the first particle PTC1 may be manufactured to have a secondary particle form. Thus, the first particle PTC1 may have a secondary particle form as shown in FIG. 7.

In a method of manufacturing the first particle PTC1 according to the disclosure, the carbon source may be introduced into the manganese iron phosphate precursor to uniformly (e.g., substantially uniformly) form a carbon coating layer on a surface of a primary particle. Afterwards, primary particles may be closely aggregated (e.g., agglomerated) through a spray drying to form a dense spherical secondary particle. Accordingly, the first particle PTC1 may include a stable carbon coating layer in both the outside and the inside of the first particle PTC1, and thus may have a relatively large amount of carbon. That is, the first particle PTC1 may include the stable carbon coating layer both on the outer surface of the secondary particle and on the surface of the primary particles, which forms the inside of the secondary particle of the first particle PTC1. An appropriate or suitable carbon amount of the first particle PTC1 of FIG. 7 may improve conductivity of the positive electrode active material layer AML1.

A carbon elemental analysis according to one or more embodiments of the disclosure may be performed with an elemental analyzer, for example, Elementar Micro Cube commercially available from Elementar Analysensysteme GmbH. A detailed operating method and conditions may be as follows. 1 to 2 mg of a sample was weighed in a tin cup, and the sample was placed into an automatic sampling tray and fed into a combustion tube through a ball valve to be burned at a combustion temperature of 1,000 °C. Thereafter, reduced copper was used to reduce the combusted gas to form carbon dioxide. A thermal conductivity detector (TCD) was utilized to detect the carbon dioxide.

In a method of measuring an amount of carbon and an amount of titanium according to one or more embodiments of the disclosure, a scanning electron microscope-energy dispersive X-ray spectroscopy (SEM-EDS) was performed on a particle surface, and a quantitative analysis was executed to obtain the amount of carbon and the amount of titanium. Besides SEM-EDS, inductively coupled plasma mass spectrometry (ICP-MS) or inductively coupled plasma optical emission spectroscopy (ICP-OES) may be used to measure the amount of carbon and the amount of titanium.

Examples and Comparative Examples of the disclosure will be described. The following Examples, however, are merely examples, and the disclosure is not limited to examples discussed below.

**Example 1: Manufacture of Positive Electrode Active Material in the Form of Single Particle**

A mixture was prepared by mixing $Mn_{0.6}Fe_{0.4}PO_4$ as a manganese iron phosphate precursor, lithium carbonate, and titanium dioxide. The mixture was mixed so that the molar ratio of Fe:Li:Ti was 1:1.03:0.003. The lithium carbonate was added in an amount of 10 wt% relative to the total weight of the mixture, and the titanium dioxide was added in an amount of 3,000 ppm relative to the total weight of the mixture. 10 wt% of glucose was further added to the mixture. A ball mill was used to perform a wet crushing process on the mixture. The mixture was evaporated and dried on a heating furnace tray, and then introduced into a vacuum oven at 85 °C and dried for 4 hours. The dried mixture was first calcined at 450 °C for 4 hours under a nitrogen environment, and then second calcined at 700 °C for 12 hours. The calcined product was crushed at a rotation speed of 8,000 rpm to obtain a positive electrode active material in the form of single particles.

**Example 2: Manufacture of Positive Electrode Active Material in the Form of Secondary Particle**

A mixture was prepared by mixing $Mn_{0.6}Fe_{0.4}PO_4$ as a manganese iron phosphate precursor, lithium carbonate, and titanium dioxide. The mixture was mixed so that the molar ratio of Fe:Li:Ti was 1:1.03:0.003. The lithium carbonate was added in an amount of 10 wt% relative to the total weight of the mixture, and the titanium dioxide was added in an amount of 3,000 ppm relative to the total weight of the mixture. 10 wt% of glucose was further added to the mixture. The mixture as a slurry was spray dried at a temperature of 230 °C under a spray pressure of 0.5 MPa, thereby being evaporated and dried. The dried mixture was first calcined at 450 °C for 4 hours under a nitrogen environment and then second calcined at 700 °C for 12 hours to obtain a positive electrode active material in the form of secondary particle.

In other words, a mixture was prepared by mixing $Mn_{0.6}Fe_{0.4}PO_4$ (manganese iron phosphate precursor), lithium carbonate, and titanium dioxide. The mixture was mixed so that the molar ratio of Fe:Li:Ti was 1:1.03:0.003, with lithium carbonate added at 10 wt% and titanium dioxide at 3,000 ppm, along with 10 wt% of glucose. For the single particle form in Example 1, the mixture was wet crushed using a ball mill, evaporated, dried on a heating furnace tray, and then in a vacuum oven at 85 °C for 4 hours. It was first calcined at 450 °C for 4 hours under nitrogen, then at 700 °C for 12 hours, and finally crushed at 8,000 rpm to produce single particles. In contrast, for the secondary particle form in Example 2, the mixture in slurry form was spray dried at 230 °C under 0.5 MPa pressure, then calcined similarly to produce secondary particles, which is composed of aggregated primary particles, resulting in a different structural form compared to the single, non-aggregated particles.

**Example 3**

A positive electrode active material was manufactured in substantially the same method as in Example 1, except that the titanium dioxide was added in an amount of 6,000 ppm to obtain the mixture.

**Example 4**

A positive electrode active material was manufactured in substantially the same method as in Example 1, except that the titanium dioxide was added in an amount of 500 ppm to obtain the mixture.

**Example 5**

A positive electrode active material was manufactured in substantially the same method as in Example 1, except that the second calcination was performed at 600 °C.

**Example 6**

A positive electrode active material was manufactured in substantially the same method as in Example 1, except that the second calcination was performed at 800 °C.

**Example 7**

A positive electrode active material was manufactured in substantially the same method as in Example 1, except that the titanium dioxide was added in an amount of 10,000 ppm to obtain the mixture.

**Comparative Example 1**

A positive electrode active material was manufactured in substantially the same method as in Example 1, except that the calcination temperature was 550 °C.

**Comparative Example 2**

A positive electrode active material was manufactured in substantially the same method as in Example 1, except that the second calcination was performed at 850 °C.

**Comparative Example 3**

A positive electrode active material was manufactured in substantially the same method as in Example 1, except that the mixture was obtained without the titanium dioxide.

**Manufacture of Positive Electrode**

95 wt% of a final positive electrode active material, 3 wt% of polyvinylidene fluoride as a binder, and 2 wt% of carbon black as a conductive material were mixed in an N-methylpyrrolidone solvent to prepare a positive electrode active material slurry. The positive electrode active material slurry was coated and dried on an aluminium current collector, and then pressed to manufacture a positive electrode.

**Fabrication of Rechargeable Lithium Battery**

A 2032-type (kind) coin half-cell was fabricated using the manufactured positive electrode and a lithium metal counter electrode. A separator (having a thickness of about 16 $\mu$m) formed of a porous polyethylene (PE) film was interposed between the positive electrode and the lithium metal counter electrode, and an electrolyte was introduced to fabricate a rechargeable lithium battery. 1.3 M LiPF6 was mixed with a solvent including ethylene carbonate (EC), ethylmethyl carbonate (EMC), and dimethyl carbonate (DMC) mixed in a volume ratio of 3:4:3, and the mixture was used as the electrolyte.

**Evaluation 1: Amount of Carbon in Active Material**

Table 1 lists results of measured amounts of doping materials (Ti) and carbon alongside the temperature at which a second calcination process occurred in each of the Examples and Comparative Examples.

Table 1

| | Temperature condition of second calcination | Amount of titanium (ppm) | Amount of carbon (wt%) |
|---|---|---|---|
| Example 1 | 700 °C | 3000 | 1.7 |
| Example 2 | 700 °C | 3000 | 1.9 |

(continued)

|  | Temperature condition of second calcination | Amount of titanium (ppm) | Amount of carbon (wt%) |
|---|---|---|---|
| Example 3 | 700 °C | 6000 | 2.8 |
| Example 4 | 700 °C | 500 | 1.1 |
| Example 5 | 600°C | 3000 | 1.7 |
| Example 6 | 800 °C | 3000 | 1.7 |
| Example 7 | 700 °C | 10000 | 1.7 |
| Comparative Example 1 | 550°C | 3000 | 1.7 |
| Comparative Example 2 | 850 °C | 3000 | 1.7 |
| Comparative Example 3 | 700 °C | 0 | 1.7 |

Referring to Table 1, it may be ascertained that the positive electrode active materials according to Examples of the disclosure have a carbon amount of about 1.1 wt% to about 2.8 wt% and a titanium amount of about 500 ppm to about 10,000 ppm, or about 500 ppm to about 6,000 ppm.

**Evaluation 2: Analysis on Surface of Positive Electrode Active Material**

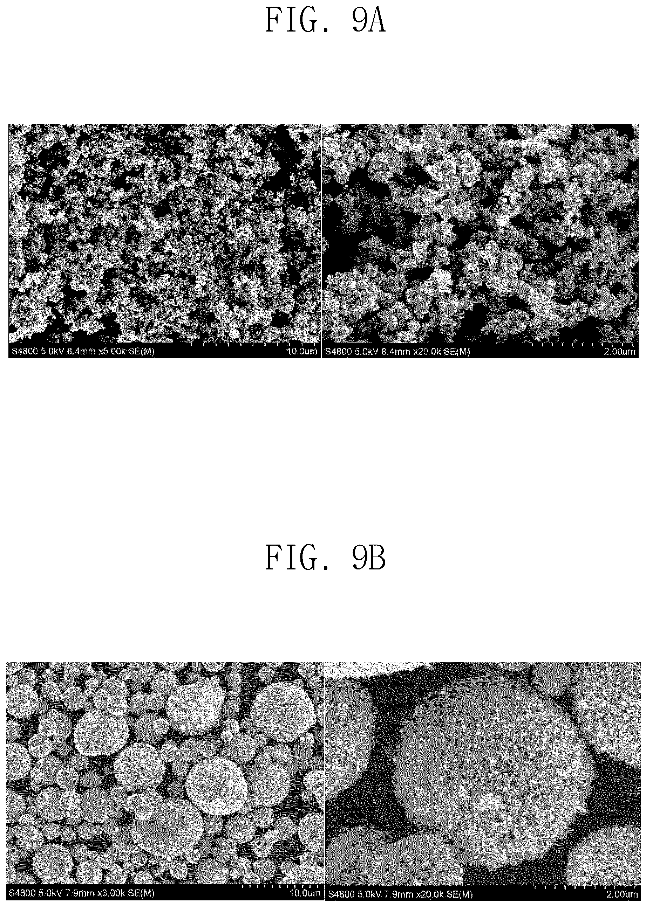

A scanning electron microscope (SEM) was used to observe a surface of the positive electrode active material. FIG. 9A shows an SEM image of the positive electrode active material manufactured in Example 1. FIG. 9B shows an SEM image of the positive electrode active material manufactured in Example 2. Referring to FIG. 9A, it may be seen that the positive electrode active material according to Example 1 of the disclosure has a single particle form, and that a primary particle constituting the single particle has a size of about 100 nm.

Referring to FIG. 9B, it may be seen that the positive electrode active material according to Example 2 of the disclosure includes the first particle in the form of a spherical secondary particle in which a plurality of primary particles are aggregated (e.g., agglomerated). It may be ascertained that the positive electrode active material in the form of secondary particle has an average particle diameter of about 9 $\mu$m, and that the primary particle constituting the secondary particle has a size of about 10 nm to about 400 nm, or about 200 nm to about 3 $\mu$m.

**Evaluation Example 3: Coating Uniformity of Positive Electrode Active Material**

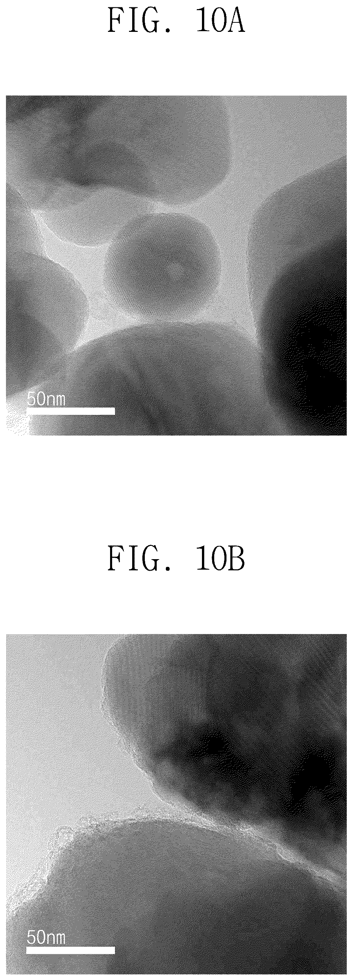

A transmission electron microscope (TEM) was used to observe the distribution of coating in the positive electrode active material. FIG. 10A shows a TEM image of the positive electrode active material manufactured in Example 1. FIG. 10B shows a TEM image of the positive electrode active material manufactured in Comparative Example 2.

Referring to FIG. 10A, it may be ascertained that carbon coating is uniformly (e.g., substantially uniformly) distributed on a particle surface and interior of the positive electrode active material according to Embodiments of the disclosure.

Referring to FIG. 10B, it may be ascertained that the positive electrode active material according to Comparative Examples of the disclosure has an excessively (or substantially) high amount of carbon to generate a thick carbon coating layer on a particle surface. Such carbon coating layer may increase a specific surface area of the positive electrode active material particle, which may hinder the movement of lithium due to an increase in resistance.

**Evaluation 4: Raman Spectroscopic Analysis**

Raman spectroscopic analysis was performed on the positive electrode active materials manufactured in the Examples and Comparative Examples. The Raman spectroscopic analysis used LabRab HR evolution UV-VIS-NIR, commercially available from Horiba Ltd., to measure Raman spectra of the positive electrode active materials.

The results are listed in Table 2.

Table 2

|  | Raman value ($I_D/I_G$) |
|---|---|
| Example 1 | 1.2 |

(continued)

|  | Raman value ($I_D/I_G$) |
|---|---|
| Example 2 | 1.2 |
| Example 3 | 1.3 |
| Example 4 | 0.9 |
| Example 5 | 1.3 |
| Example 6 | 1.1 |
| Example 7 | 1.2 |
| Comparative Example 1 | 1.4 |
| Comparative Example 2 | 1.0 |
| Comparative Example 3 | 1.2 |

Referring to Table 2, the Raman spectrum obtained from the Raman spectroscopic analysis shows values of G band (1594 cm$^{-1}$) and D band (1338 cm$^{-1}$).

Table 2 also shows that the positive electrode active materials according to Embodiments of the disclosure have a Raman spectrum ratio ($I_D/I_G$) in a range of about 0.9 to about 1.3 obtained from the Raman spectroscopic analysis.

**Evaluation 4: Battery Characteristics**

Characteristics of the rechargeable lithium batteries fabricated using the positive electrode active materials of the Examples and Comparative Examples were evaluated.

The rechargeable lithium battery was initially charged under conditions of constant current (0.2 C) and constant voltage (4.45 V), and after resting for 10 minutes, the rechargeable lithium batteries were initially discharged under conditions of constant current (0.2 C) until a voltage reached 2.5 V. Afterwards, the rechargeable lithium battery was charged and discharged once at -20 °C with a rate of 0.2 C/0.2 C. The evaluation results of battery characteristics are shown in Table 3.

Table 3

|  | Coin cell | | | | |
|---|---|---|---|---|---|
|  | 4.45 V charge capacity (mAh/g) | 4.45 V discharge capacity (mAh/g) | 4.45 V efficiency (%) | Average discharge voltage (V) | -20 °C capacity (mAh/g) |
| Example 1 | 157.5 | 148.9 | 94.5 | 3.57 | 106.5 |
| Example 2 | 159.9 | 152.6 | 95.4 | 3.60 | 116.7 |
| Example 3 | 157.8 | 147.5 | 93.4 | 3.56 | 104.3 |
| Example 4 | 156.2 | 145.6 | 93.2 | 3.54 | 103.6 |
| Example 5 | 150.3 | 139.8 | 93.0 | 3.53 | 102.8 |
| Example 6 | 152.4 | 141.9 | 93.1 | 3.50 | 99.1 |
| Example 7 | 156.5 | 146.8 | 93.8 | 3.54 | 105.8 |
| Comparative Example 1 | 148.5 | 136.9 | 92.2 | 3.47 | 98.4 |
| Comparative Example 2 | 150.5 | 138.7 | 92.2 | 3.48 | 97.5 |
| Comparative Example 3 | 155.6 | 144.4 | 92.8 | 3.51 | 99.2 |

Referring to Table 3, it may be observed that the rechargeable lithium batteries according to the Examples of the disclosure each have a capacity greater than that of the rechargeable lithium batteries according to Comparative Examples. It may also be observed that the rechargeable lithium batteries according to Examples of the disclosure each have an average voltage greater than that of the rechargeable lithium batteries according to Comparative Examples. In addition, it may be observed that the rechargeable lithium batteries according to Examples of the disclosure each exhibit a charge/discharge efficiency superior to that of the rechargeable lithium batteries according to Comparative Examples.

Accordingly, it may be ascertained that each of the positive electrode active materials according to Examples, where the positive electrode active materials each include about 1.1 to 2.8 wt% of carbon, about 500 to 10,000 ppm of titanium, and have the Raman spectrum ratio ($I_D/I_G$) of about 0.9 to 1.3 obtained from Raman spectroscopic analysis, include evenly distributed carbon having an optimum or desirable amount and thickness to significantly improve conductivity and electrochemical properties of the rechargeable lithium battery.

A positive electrode active material according to the disclosure includes a first particle.

In the positive electrode active material according to the disclosure, a calcination temperature and an amount of a doping material may be adjusted to uniformly (e.g., substantially uniformly) coat the first particle with an optimum amount of a coating material. A rechargeable lithium battery according to the disclosure may have high conductivity and improved electrochemical properties.

As used herein, the terms "use," "using," and "used" may be considered synonymous with the terms "utilize," "utilizing," and "utilized," respectively. As used herein, expressions such as "at least one of", "one of", and "selected from", when preceding a list of elements, modify the entire list of elements and do not modify the individual elements of the list. For example, "at least one selected from among a, b and c", "at least one of a, b or c", and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

The use of "may" when describing embodiments of the inventive concept refers to "one or more embodiments of the inventive concept."

As used herein, the term "about," and similar terms are used as terms of approximation and not as terms of degree, and are intended to account for the inherent deviations in measured or calculated values that would be recognized by those of ordinary skill in the art. "About" as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within $\pm$ 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

Here, unless otherwise defined, the listing of steps, tasks, or acts in a particular order should not necessarily means that the invention or claims require that particular order. That is, the general rule that unless the steps, tasks, or acts of a method (e.g., a method claim) actually recite an order, the steps, tasks, or acts should not be construed to require one.

A battery (positive electrode active material) manufacturing device, a battery management system (BMS) device, and/or any other relevant devices or components according to embodiments of the present invention described herein may be implemented utilizing any suitable hardware, firmware (e.g. an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

A person of ordinary skill in the art, in view of the present disclosure in its entirety, would appreciate that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

While this disclosure has been described in connection with what is presently considered to be example embodiments, it is to be understood that the disclosure is not limited to the disclosed embodiments and is intended to cover one or more suitable modifications and equivalent arrangements included within the scope of the appended claims, and equivalents thereof. Therefore, the aforementioned embodiments should be understood to be examples but not limiting this disclosure in any way.

Certain embodiments are set out in the following clauses:

Clause 1. A method of manufacturing a positive electrode active material, the method comprising: forming a mixture by mixing a manganese iron phosphate precursor, a lithium source, a carbon source, and a dopant source; drying the mixture; and preparing a first particle by performing a calcination on the dried mixture, wherein the first particle comprises a compound represented by Chemical Formula 1:

$$\text{Chemical Formula 1} \qquad \text{LiMn}_x\text{Fe}_{1-x}\text{M}_y\text{PO}_4,$$

wherein, in Chemical Formula 1, $0.2 < x < 0.8$ and $0.0001 \leq y \leq 0.05$, and M is at least one element selected from among Ti, Al, Mg, Zr, V, Zn, Nb, K, Y, B, and Cu.

Clause 2. The method of Clause 1, wherein drying of the mixture comprises performing a spray drying.

Clause 3. The method of Clause 2, wherein the mixture used as a spray solution of the spray drying has a solid content of about 20% to about 40% and a viscosity of about 1,500 mPa·s to about 2,500 mPa·s.

Clause 4. The method of Clause 2 or Clause 3, wherein the spray drying comprises forming a secondary particle by aggregating particles of the mixture.

Clause 5. The method of any of Clauses 2 to 4, wherein the spray drying is performed at a temperature of about 100 °C to about 300 °C.

Clause 6. The method of any of Clauses 2 to 5, wherein, in performing of the spray drying, a spray solution has a feed pressure of about 0.2 MPa to about 0.7 MPa and a flow rate of about 30 mL/min to about 80 mL/min.

Clause 7. The method of any preceding Clause, wherein the calcination is performed once or twice at a temperature about 300 °C to about 800 °C.

Clause 8. A rechargeable lithium battery comprising the positive electrode active material as hereinbefore described and/or as claimed in the accompanying claims.

**Claims**

1. A positive electrode active material, comprising:

   a first particle,
   the first particle comprising a compound represented by Chemical Formula 1 and having a first average particle diameter,
   a ratio $(I_D/I_G)$ of the intensity $(I_D)$ of the D peak to the intensity $(I_G)$ of the G peak of the first particle being about 0.9 to about 1.3,
   the D peak being a peak present at wave number of about $1340 \pm 10$ cm$^{-1}$, and
   the G peak being a peak present at wave number of about $1590 \pm 10$ cm$^{-1}$, in a Raman spectrum obtained from Raman spectroscopy,
   wherein Chemical Formula 1 is:

$$\text{Li}_{a1}\text{Mn}_x\text{Fe}_{1-x}\text{M}_y\text{PO}_4,$$

   wherein, in Chemical Formula 1,
   $0.8 \leq a1 \leq 1.2$, $0.2 < x < 0.8$ and $0.0001 \leq y \leq 0.05$, and
   M is at least one element selected from among Ti, Al, Mg, Zr, V, Zn, Nb, K, Y, B, and Cu.

2. The positive electrode active material as claimed in claim 1, wherein

   M represents a doping element in the first particle and comprises Ti, and
   the doping element is about 500 ppm to about 10,000 ppm in amount in the first particle.

3. The positive electrode active material as claimed in claim 1 or claim 2, wherein

   the first particle comprises a carbon-containing coating layer, and

an amount of carbon in the first particle is about 1.1 wt% to about 2.8 wt% based on a total 100 wt% of the first particle.

4. The positive electrode active material as claimed in any preceding claim, wherein

the first particle is a single particle, and
the first average particle diameter is about 0.2 $\mu$m to about 2.5 $\mu$m.

5. The positive electrode active material as claimed in claim 4, wherein

the first particle comprises at least one primary particle, and
a size of the primary particle is about 10 nm to about 200 nm.

6. The positive electrode active material as claimed in any preceding claim, wherein

the first particle is a secondary particle in which a plurality of primary particles are aggregated with each other, and
an average particle size of the plurality of primary particles is about 10 nm to about 400 nm.

7. The positive electrode active material as claimed in claim 6, wherein

the secondary particle has a spherical shape, and
the first average particle diameter is about 0.2 $\mu$m to about 20 $\mu$m.

8. The positive electrode active material as claimed in claim 6 or claim 7, wherein

the first particle further comprises a grain boundary coating layer on an interface between the plurality of primary particles, and
the grain boundary coating layer comprises carbon.

9. The positive electrode active material as claimed in any one of claims 6 to 8, wherein a porosity of the first particle is about 20% to about 60%.

10. The positive electrode active material as claimed in any one of claims 6 to 9, wherein a span value of the first particle analyzed with a particle size analyzer is about 0.5 to about 7.

11. A method of manufacturing a positive electrode active material, comprising:

forming a mixture by mixing a manganese iron phosphate precursor, a lithium source, a carbon source, and a dopant source;
drying the mixture; and
preparing a first particle by performing a calcination on the mixture,
wherein the first particle comprises a compound represented by Chemical Formula 1,
where Chemical Formula 1 is:

$$Li_{a1}Mn_xFe_{1-x}M_yPO_4,$$

wherein, in Chemical Formula 1,
$0.8 \leq a1 \leq 1.2$, $0.2 < x < 0.8$ and $0.0001 \leq y \leq 0.05$, and
M is at least one element selected from among Ti, Al, Mg, Zr, V, Zn, Nb, K, Y, B, and Cu.

12. The method as claimed in claim 11, wherein the dopant source comprises a titanium compound.

13. The method as claimed in claim 11 or claim 12, wherein

the carbon source is mixed in an amount of about 1 wt% to about 20 wt% based on a total weight of the mixture, and
the dopant source is mixed in an amount of about 0.01 wt% to about 1 wt% based on the total weight of the mixture.

14. The method as claimed in any one of claims 11 to 13, wherein the drying of the mixture comprises performing a spray drying.

15. The method as claimed in claim 14, wherein the mixture utilized as a spray solution of the spray drying has a solid content of about 20% to about 40% and a viscosity at 25 °C of about 1,500 mPa·s to about 2,500 mPa·s.

# FIG. 1

ELL

Li$^+$

COL1 AML1    30    COL2 AML2
   10                    20

# FIG. 2

# FIG. 3

EP 4 654 285 A1

# FIG. 4

# FIG. 5

# FIG. 6

AML1

PTC1 APD1

CDM

BND

# FIG. 7

# FIG. 8

```
         ┌─────────┐
         │  Start  │
         └────┬────┘
              │
              ▼
┌──────────────────────────────────┐
│ Mixing of precursor, lithium source,│──S100
│  carbon source, and dopant source │
└──────────────┬───────────────────┘
               │
               ▼
┌──────────────────────────────────┐
│          Wet crushing            │──S200
└──────────────┬───────────────────┘
               │
               ▼
┌──────────────────────────────────┐
│             Drying               │──S300
└──────────────┬───────────────────┘
               │
               ▼
┌──────────────────────────────────┐
│          Calcination             │──S400
└──────────────┬───────────────────┘
               │
               ▼
┌──────────────────────────────────┐
│          Dry crushing            │──S500
└──────────────┬───────────────────┘
               │
               ▼
         ┌─────────┐
         │   End   │
         └─────────┘
```

# FIG. 9A

# FIG. 9B

# FIG. 10A

# FIG. 10B

Europäisches
Patentamt

European
Patent Office

Office européen
des brevets

# EUROPEAN SEARCH REPORT

**Application Number**

EP 25 17 1160

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 117 133 903 A (QUJING DYNANONIC NANO TECH CO LTD; FOSHAN DYNANONIC TECH CO LTD) 28 November 2023 (2023-11-28) * [0070-9]: example A1 * | 1-15 | INV. H01M4/136 H01M4/58 |
| A | CN 116 315 135 A (EVE ENERGY BATTERY CO LTD) 23 June 2023 (2023-06-23) * [0054]: example 11 * | 1-15 | |
| A | US 2023/339756 A1 (LIANG CE [CN] ET AL) 26 October 2023 (2023-10-26) * [0203], tab. 1: all examples * | 1-15 | |

**TECHNICAL FIELDS SEARCHED (IPC)**

H01M

The present search report has been drawn up for all claims

| Place of search | Date of completion of the search | Examiner |
|---|---|---|
| Munich | 10 September 2025 | Radeck, Stephanie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 17 1160

This annex lists the patent family members relating to the patent documents cited in the above-mentioned European search report.
The members are as contained in the European Patent Office EDP file on
The European Patent Office is in no way liable for these particulars which are merely given for the purpose of information.

10-09-2025

| Patent document cited in search report | | Publication date | Patent family member(s) | | Publication date |
|---|---|---|---|---|---|
| CN 117133903 | A | 28-11-2023 | NONE | | |
| CN 116315135 | A | 23-06-2023 | CN | 116315135 A | 23-06-2023 |
| | | | CN | 221102127 U | 07-06-2024 |
| | | | WO | 2024239415 A1 | 28-11-2024 |
| US 2023339756 | A1 | 26-10-2023 | CN | 113942990 A | 18-01-2022 |
| | | | EP | 4245721 A1 | 20-09-2023 |
| | | | JP | 7493105 B2 | 30-05-2024 |
| | | | JP | 2023551742 A | 12-12-2023 |
| | | | KR | 20230125080 A | 28-08-2023 |
| | | | US | 2023339756 A1 | 26-10-2023 |
| | | | WO | 2023024651 A1 | 02-03-2023 |

EPO FORM P0459

For more details about this annex : see Official Journal of the European Patent Office, No. 12/82